## Europäisches Patentamt
## European Patent Office
## Office européen des brevets

(11) Numéro de publication: **0 028 175**
**B1**

# FASCICULE DE BREVET EUROPEEN

(45) Date de publication du fascicule du brevet:
**25.05.83**

(21) Numéro de dépôt: **80401410.8**

(22) Date de dépôt: **03.10.80**

(51) Int. Cl.³: **H 04 N 3/16**

(54) Circuit de correction de la distorsion de coussin est-ouest pour récepteur vidéofréquence.

(30) Priorité: **23.10.79 FR 7926245**

(43) Date de publication de la demande:
**06.05.81 Bulletin 81/18**

(45) Mention de la délivrance du brevet:
**25.05.83 Bulletin 83/21**

(84) Etats contractants désignés:
**BE DE GB IT NL**

(56) Documents cités:
**FR-A-2 390 057**
**US-A-3 689 797**

(73) Titulaire: **THOMSON-BRANDT, 173, Boulevard Haussmann, F-75379 Paris Cedex 08 (FR)**

(72) Inventeur: **Shepherd, John, "THOMSON-CSF" SCPI 173, Bld Haussmann, F-75360 Paris Cedex 08 (FR)**

(74) Mandataire: **Grynwald, Albert et al, THOMSON-CSF SCPI 173, Bld Haussmann, F-75379 Paris Cedex 08 (FR)**

## Circuit de correction de la distorsion de coussin est-ouest
## pour récepteur vidéofréquence

La présente invention est relative à un circuit de correction de la distorsion géométrique de coussin est-ouest de l'image obtenue sur l'écran d'un tube cathodique à déviation magnétique du faisceau d'électrons. Elle concerne également un récepteur de télévision équipé d'un tel circuit.

Les images reproduites par balayage d'un spot électronique sur la surface d'un écran de tube cathodique sont généralement affectées d'une déformation géométrique, dite distorsion en coussin Est-Ouest pour la déformation affectant la diraction horizontale de l'image, et distorsion en coussin Nord-Sud pour la déformation affectant la direction verticale.

La présente invention concerne la distorsion de coussin Est-Ouest. L'image affectée d'une telle distorsion paraît être constituée de barres verticales affectées d'une déformation centrale dirigée vers la barre verticale médiane qui n'est pas déformée en raison de la symétrie de la déviation du spot.

La correction de ce défaut consiste donc à redresser ces barres verticales. Elle est généralement réalisée par la modulation de l'amplitude du courant alternatif de balayage ligne par un signal de forme quasiment parabolique et à la fréquence trame, le maximum de correction ayant lieu pour les lignes horizontales médianes car celles-ci engendrent les parties centrales des barres verticales.

Ce courant de balayage ligne peut être modulé de plusieurs manières, par exemple en modulant la tension d'alimentation du circuit de balayage ligne, ou encore en connectant un transducteur en série ou en parallèle avec le déviateur ligne.

Des circuits de cette seconde catégorie sont décrits par exemple dans les demandes de brevet français No. 2 363 950 et No. 2 390 057.

Dans ces circuits de balayage ligne, on prévoit, en plus du condensateur de correction en S habituel, un autre condensateur de correction rendu nécessaire par la présence du transducteur.

Le circuit en mode commuté de la demande de brevet français No. 2 363 950 comporte une inductance montée en série avec la bobine de déviation horizontale. Un commutateur est connecté en parallèle avec l'inductance. Ce commutateur conduit durant la seconde moitié de l'intervalle de retour ligne à des instants qui sont progressivement avancés et retardés pendant chaque cycle de déviation verticale. Ainsi la valeur moyenne de l'inductance en série avec la bobine de déviation horizontale varie et cette variation est commandée de manière à corriger la distorsion en coussin Est-Ouest.

Le commutateur utilisé dans ce circuit comprend un thyristor et une diode montés tête-bêche et sa commande s'effectue à l'aide d'impulsions, à fréquence égale à la fréquence ligne, appliquées à la gâchette du thyristor. Il est possible d'agir sur l'amplitude du courant dans le déviateur horizontal en faisant varier la position des impulsions. Une impulsion de commande placée à la fin du retour ligne conduit à une amplitude minimum, alors qu'une amplitude maximum est obtenue en plaçant l'impulsion au milieu du retour ligne.

Pour engendrer ces impulsions, on prévoit un circuit modulateur de phase synchronisé par les impulsions lignes, et à l'entrée duquel est appliqué un signal parabolique à la fréquence de trame. Le signal en sortie du modulateur de phase est injecté directement sur la gâchette du thyristor.

Ce circuit de commande, malgré sa grande simplicité, présente certains inconvénients, en particulier, une fonction de transfert non linéaire, la correction étant alors imparfaite et dépendante des réglages.

En effet, l'impulsion ligne étant de forme sinusoidale, à une variation linéaire de la phase des impulsions appliquées sur la gâchette du thyristor correspond une variation non linéaire de l'amplitude du courant dans le déviateur.

De plus, à un instant donné du retour de ligne, le courant dans la diode du dispositif de commutation prend une valeur nulle. De ce fait, la tension aux bornes du dispositif de commutation diode-thyristor croît très rapidement. Une résistance et un condensateur sont donc généralement connectés aux bornes du dispositif de commutation pour en assurer la protection. Cependant, ce réseau ne supprime pas totalement la surtension et entraîne de ce fait une non linéarité du courant dès que l'impulsion de commande injectée sur la gâchette du thyristor se situe au voisinage de l'instant où apparaît une surtension.

Cette non linéarité de la fonction de transfert des circuits de commande n'affecte la parabole de correction de la distorsion de coussin Est-Ouest que lorsque celle-ci doit être de grande amplitude. Elle entraîne cependant une variation de l'amplitude de la correction lorsqu'on modifie la largeur de l'image en faisant varier l'amplitude moyenne du courant de balayage ligne.

Pour cette raison, les réglages qu'il est toujours nécessaire d'effectuer pour adapter un circuit de balayage ligne à un téléviseur sont rendus difficiles. En d'autres termes, ces circuits sont difficilement reproductibles.

Pour remédier à cet inconvénient, on a déjà proposé (demande de brevet français 2 390 057) d'effectuer une contre réaction, c'est-à-dire de réinjecter sur une entrée du modulateur de phase un signal représentant le courant dans la bobine de déviation, ce qui permet d'améliorer la linéarité du circuit. Mais pour élaborer le signal de contre réaction, il est fait appel, dans ce circuit connu, à un intégrateur, ce qui complique la réalisation.

L'invention est exemple d'un tel défaut. Elle part de la constatation que la tension aux bornes du

2

condensateur de correction est une fonction linéaire de l'intensité du courant dans le déviateur horizontal.

Le circuit selon l'invention est caractérisé en ce que le condensateur de correction étant disposé de manière à ce que la tension à ses bornes représente l'intensité du courant dans la bobine de déviation, l'une des bornes du condensateur est reliée à un potentiel constant et son autre borne est reliée directement à l'entrée de contre-réaction.

Dans la réalisation préférée, le condensateur de correction est en série avec l'enroulement secondaire d'un transformateur dont le primaire constitue l'inductance en série avec la bobine de déviation.

La contre réaction peut ainsi être réalisée de manière particulièrement simple et la linéarité de la fonction de transfert est d'execellente qualité.

D'autres avantages et caractéristiques de l'invention ressortiront de la description suivante, donnée à titre d'exemple et illustrée par les figures annexées qui représentent:

— la figure 1, un schéma d'un circuit de correction de la distorsion de coussin Est-Ouest selon la technique antérieure;
— la figure 2a, un schéma d'un circuit de correction, en mode commuté, de la distorsion de coussin Est-Ouest selon l'invention;
— la figure 2b, un schéma équivalent à celui de la figure 2a pendant l'aller de balayage ligne;
— la figure 3, un premier exemple de réalisation d'un circuit de correction conforme au schéma de la figure 2a;
— la figure 4, un second exemple de réalisation d'un circuit de correction conforme au schéme de la figure 2a.

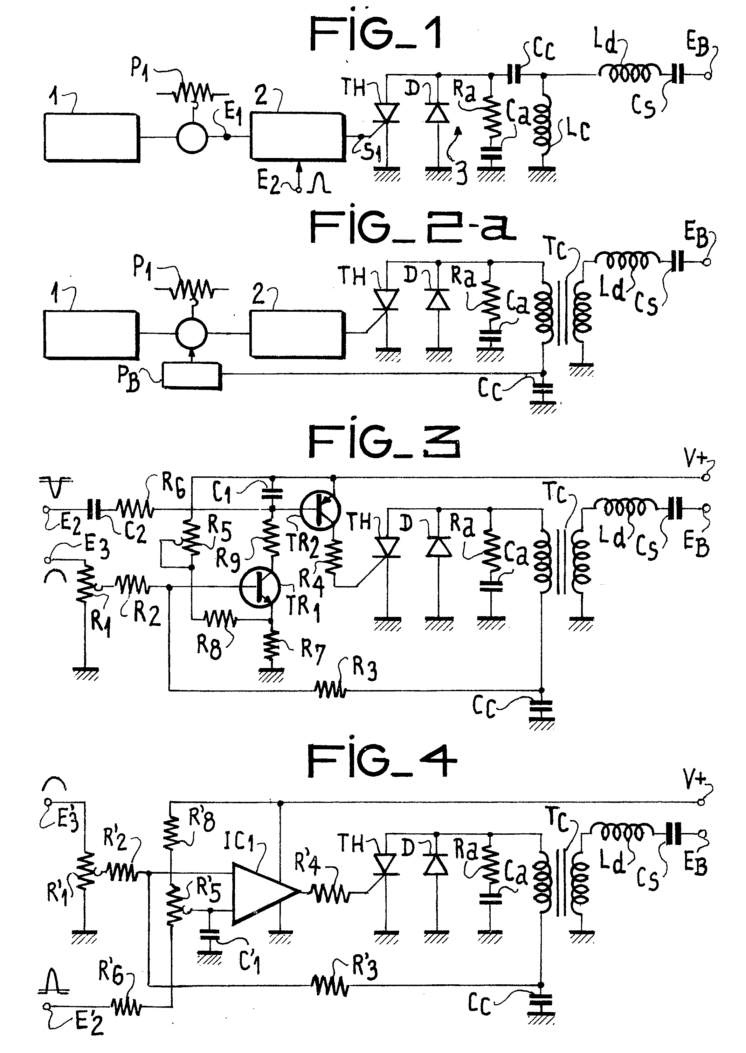

L'entrée $E_B$ du circuit représente à la figure 1 est connectée à un circuit de balayage ligne (non représenté) fournissant à la bobine de déviation horizontale Ld un courant en dents de scie à la fréquence de ligne. Une mise en forme en »S« du courant de déviation horizontale est effectuée par un condensateur $C_S$ monté en série avec la bobine de déviation horizontale Ld.

Un dispositif de modulation du courant dans le déviateur horizontal Ld est connecté en série avec celui-ci et comporte d'une part une inductance de correction Lc connectée en série avec l'inductance Ld et d'autre part un condensateur de correction Cc en série avec un commutateur 3, le tout étant en parallèle avec l'inductance Lc.

Le commutateur comporte un thyristor TH monté tête-bêche avec une diode D.

Selon une variante, également connue, l'inductance Lc est remplacée par un autotransformateur. Cette configuration permet de réduire la capacité du condensateur de correction Cc et de diminuer l'amplitude du courant dans le thyristor et la diode du commutateur.

En avançant progressivement à chaque ligne l'instant de fermeture du commutateur pendant la première moitié de l'intervalle de balayage vertical, on réduit progressivement l'impédance moyenne en série avec l'enroulement de déviation ligne Ld. L'énergie emmagasinée dans cet enroulement Ld augmente donc progressivement pendant la première moitié de l'intervalle de balayage vertical.

En retardant progressivement d'une ligne à l'autre l'instant de fermeture du commutateur pendant la seconde moitié de l'intervalle de balayage vertical, on augmente progressivement l'impédance moyenne en série avec l'enroulement Ld, entraînant ainsi une diminution progressive de l'énergie emmagasinée dans cet enroulement Ld.

La commande du dispositif de modulation s'effectue donc à l'aide d'impulsions à fréquence de balayage des lignes appliquées sur la gâchette du thyristor TH.

Ces circuits de commande connus comportent généralement un circuit modulateur de phase 2 dont la sortie SI est directement connectée à la gâchette du thyristor TH.

Ce circuit modulateur de phase 2 reçoit sur son entrée $E_1$ un signal parabolique à la fréquence de trame et son entrée $E_2$ un signal de synchronisation constitué par les impulsions lignes. On obtient ainsi en sortie $S_1$ des impulsions à la fréquence ligne mais dont les fronts montants sont progressivement avancés par rapport à une valeur moyenne suivant une loi parabolique, loi parabolique que l'on retrouve pour la modulation de l'amplitude du signal de balayage ligne de manière à obtenir une correction de la distorsion de coussin Est-Ouest.

Ce signal parabolique est fourni par un circuit générateur de parabole 1 dont la sortie est connectée en entrée $E_1$ du modulateur de phase 2. Un potentiomètre $P_1$ permet de régler la largeur de l'image sur l'écran du tube cathodique.

Cependant, il est généralement difficile de réaliser avec un petit nombre de composants un modulateur de phase à fonction de transfert parfaitement linéaire.

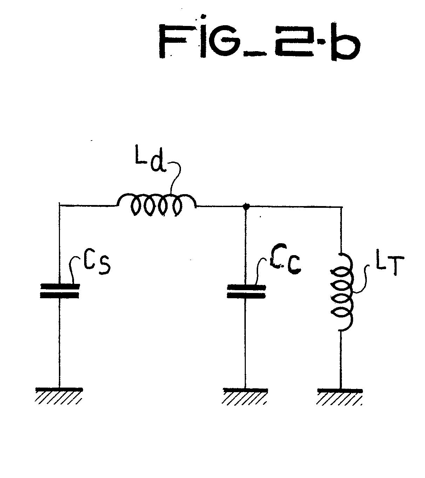

La figure 2a, représente un schéma synoptique d'un circuit de correction selon l'invention.

Le thyristor TH et la diode D montés tête-bêche sont connectés en parallèle avec un ensemble formé de l'enroulement secondaire d'un transformateur de correction Tc en série avec un condensateur de correction Cc.

L'enroulement secondaire du transformateur Tc est flottant. L'enroulement primaire est connecté en série avec l'enroulement de déviation ligne Ld, lui-même connecté en série avec le condensateur Cs de correction en S, une des bornes de cet enroulement primaire étant connectée à la masse.

L'entrée $E_B$ est connectée à un circuit de balayage ligne (non représenté) fournissant le signal en dents de scie à la fréquence ligne.

Un réseau de protection à résistance Ra et condensateur en série Ca est connecté entre anode et cathode du thyristor TH.

La gâchette du thyristor TH est connectée à un circuit de commande comportant un circuit modulateur de phase 2, un circuit générateur 1 d'un signal parabolique, et un réseau de contre réaction $P_B$.

La sortie du circuit modulateur de phase 2 est connectée à la gâchette du thyristor TH, son entrée recevant d'une part le signal parabolique du circuit générateur de parabole 1 et d'autre part un signal provenant de la sortie du réseau de contre réaction $P_B$ dont l'entrée est connectée entre la borne du condensateur Cc connectée à la borne flottante de l'enroulement secondaire et la masse.

Un circuit équivalent pendant la période aller de balayage ligne est représenté sur la figure 2b. Il comporte le condensateur $C_S$ en série avec le déviateur ligne Ld, l'ensemble étant en parallèle avec le condensateur Cc, lui-même en parallèle avec l'inductance $L_T$ équivalente au transformateur Tc. La connexion de $C_S$ à la masse résulte de la présence d'un interrupter dans le générateur connecté à l'entrée $E_B$. La connexion du condensateur Cc à la masse provient de la conduction du thyristor TH.

Dans ces conditions, la tension aux bornes du déviateur ligne Ld est égale à la différence entre les tensions aux bornes des condensateurs $C_S$ et $C_c$.

A partir de ce fait, les calculs montrent que le courant crête à crête, c'est-à-dire l'amplitude du courant, dans le déviateur ligne $L_d$ est directement proportionnel à la tension moyenne à ses bornes. Ces calculs sont les suivants:

La tension $V_L$ aux bornes du déviateur Ld a pour valeur:

$$V_L = Ld \frac{di}{dt}$$

dans cette formule, i est l'intensité du courant traversant le déviateur d'inductance de valeur Ld.

La valeur moyenne Vm de la tension pendant la période, de durée Ta, d'aller de balayage, aux bornes du déviateur est:

$$Vm = \frac{1}{Ta} \int_0^{Ta} V_L\, dt = \frac{Ld}{Ta} \int_0^{Ta} \frac{di}{dt}\, dt = \frac{Ld}{Ta} \int_{I_0}^{I_1} di$$

$I_0$ et $I_1$, sont les intensités du courant dans le déviateur resprectivement du début et à la fin de l'aller de balayage. Dans ces conditions:

$$Vm = \frac{Ld}{Ta} (I_1 - I_0)$$

$I_1 - I_0$ est l'amplitude du courant dans le déviateur. Etant donné que: $V_L = V_2 - V_1$, $V_1$ étant la tension aux bornes de Cc, et que $V_2$ est imposée par l'alimentation connectée à $E_B$, l'amplitude du courant dans le déviateur est bien une fonction linéaire de la tension moyenne aux bornes du condensateur Cc.

C'est cette tension moyenne aux bornes du condensateur $C_c$ qui est appliquée, en tout ou partie, par l'intermédiaire d'un réseau de contre réaction $P_B$ en entrée du modulateur de phase 2. Le secondaire du transformateur $T_c$ étant flottant, une borne du condensateur Cc peut ainsi être mise à la masse et on dispose aux bornes de ce condensateur Cc d'un signal parabolique à la fréquence trame supporté par une tension continue positive et dont le potentiel ne subit pas de variations de fortes valeurs comme ce serait le cas si ce condensateur ne présentait pas une borne à la masse comme dans les circuits antérieurement connus. La phase de ce signal parabolique est généralement opposée à celle du signal provenant du circuit générateur de parabole 1.

Il est donc possible d'introduire une contre réaction sur le circuit modulateur de phase 2 en injectant directement sur son entrée le signal parabolique du circuit générateur 1 et le signal de contre réaction.

Ces deux signaux sont additionnés en entrée du circuit modulateur de phase dans des proportions adaptées à une bonne correction.

On notera ici que si le condensateur $C_c$ ne comportait pas une borne à potentiel constant la tension à ses bornes varierait dans des proportions importances ce qui rendrait sans intérêt pratique son utilisation pour la contre réaction car les circuits destinés à réaliser cette fonction seraient alors complexes à réaliser.

Afin de supprimer une modulation résiduelle éventuelle à la fréquence de ligne aux bornes du condensateur Cc, le réseau de contre réaction comporte un filtre passe-bas.

Cependant, l'adjonction d'un tel filtre passe-bas est superflue lorsque le condensateur Cc est de forte valeur.

Pour une bonne linéarité du système, le gain du circuit en boucle ouverte doit être grand tout en

4

respectant les contraintes de stabilité en boucle fermée.

La figure 3, représente un premier exemple de réalisation d'un circuit de correction selon l'invention.

Sur ce schéma, on retrouve la même configuration qu'à la figure 2a, c'est-à-dire le thyristor TH et la diode D montés tête-bêche et connectés en parallèle avec l'ensemble formé de l'enroulement secondaire flottant d'un transformateur de correction $T_c$ en série avec le condensateur de correction Cc. L'enroulement primaire est connecté en série avec l'enroulement de déviation ligne Ld et le condensateur $C_S$ de correction de la distorsion en S.

Un réseau résistance-condensateur Ra, Ca protège le thyristor contre les surtensions.

Le circuit modulateur de phase comporte un étage amplificateur réalisé en composants discrets et comprenant un transistor $TR_1$ polarisé par des résistances $R_5$, $R_7$ et $R_8$, et un étage de sortie comprenant un transistor $TR_2$ en commutation et la résistance $R_4$.

La base du transistor amplificateur $TR_1$ est connectée par l'intermédiaire d'une résistance $R_2$ et d'un potentiomètre $R_1$ à une source génératrice d'un signal parabolique à la fréquence trame (entrée $E_3$).

La base de ce même transistor $TR_1$ est en outre connectée par l'intermédiaire d'une résistance de contre réaction $R_3$, au point de jonction du condensateur de correction Cc et de l'enroulement secondaire du transformateur Tc.

Les résistances $R_2$ et $R_3$ effectuent donc l'addition d'un signal parabolique en provenance d'un générateur et du signal de contre réaction. Le signal résultant est amplifié par le transistor $TR_1$ dont le collecteur est connecté au travers d'une résistance $R_9$ à la base du transistor $TR_2$.

La base de ce transistor $TR_2$ est connectée en outre à un réseau d'intégration condensateur $C_1$, résistance $R_6$, ce réseau d'intégration recevant sur son entrée des impulsions de lignes prélevées par exemple sur le transformateur très haute tension.

Le courant injecté sur la base du transistor $TR_2$ est la somme du courant collecteur du transistor $TR_1$ et du courant en forme de dents de scie obtenu par intégration des impulsions lignes.

La position temporelle des impulsions apparaissant au collecteur du transistor $TR_2$ dépend de la valeur du courant collecteur du transistor $TR_1$.

Lorsque le signal appliqué sur la base du transistor $TR_1$ augmente, le courant collecteur de ce transistor $TR_1$ augmente, et la position des impulsions est alors avancée par rapport à une position moyenne prédéterminée.

Par ailleurs, lorsque la valeur de la résistance variable $R_5$ varie, la valeur du courant collecteur du transistor varie elle aussi, entrainant une variation de la largeur de l'image sur l'écran du tube cathodique.

La figure 4 représente un second exemple de réalisation d'un circuit de correction conforme à l'invention.

Sur ce schéma, on retrouve la même configuration qu'à la figure 3; seul le circuit de modulation de phase a une structure différente.

En effet, le signal résultant provenant de l'addition du signal de contre réaction et du signal parabolique du générateur de parabole est appliqué à une des entrées d'un circuit comparateur intégré $IC_1$.

Pour ce faire, cette entrée est connectée au travers d'une résistance $R'_2$ à un potentionmètre $R'_1$, lui-même connecté au circuit générateur de parabole (entrée $E'_3$).

La contre réaction est assurée par la résistance $R'_3$ connectée entre cette entrée et la borne commune du condensateur Cc et de l'enroulement secondaire du transformateur $T_c$.

Ce signal résultant est comparé au signal en forme de dents de scie appliqué à la seconde entrée du circuit intégré comparateur $IC_1$.

En effet, cette seconde entrée est connectée à un réseau d'intégration résistance $R'_6$, condensateur $C'_1$ recevant sur son entrée des impulsions à la fréquence de ligne.

La sortie du circuit intégré $IC_1$ est connectée à une résistance $R'_4$ elle-même connectée à la gâchette du thyristor TH, de manière que le signal résultant de la comparaison des deux signaux d'entrée attaque la gâchette du thyristor TH.

Sur les circuits des figures 3 et 4, aucun filtre passe-bas n'a été introduit, la valeur du condensateur Cc étant suffisamment élevée pour que la modulation résiduelle à la fréquence ligne aux bornes de ce condensateur Cc soit quasiment nulle.

Ce circuit de correction de la distorsion de coussin Est-Ouest équipe les récepteurs vidéofréquence, et plus particulièrement les récepteurs de télévision couleur, et permet à partir d'un nombre de composants comparable aux circuits les plus simples antérieurement connus, d'obtenir une correction plus précise.

**Revendications**

1. Circuit de correction de la distorsion de coussin est-ouest de l'image obtenue sur l'écran d'un tube de télévision comportant: un condensateur ($C_c$) de correction, une inductance ($T_c$) de correction en série avec la bobine ($L_d$) de déviation horizontale, et un commutateur (3) commandé pour agir sur la valeur de cette inductance ($T_c$), la commande s'effectuant par un circuit qui comprend un modulateur de phase (2) dont l'entrée est reliée à un générateur (1) de signal parabolique à la fréquence trame ainsi qu'à une branche (P$_B$) de contre-réaction réinjectant sur une entrée du modulateur (2) un signal représentant le courant dans la bobine de déviation, caractérisé en ce que le sateur (C$_c$) de correction étant disposé de manière à ce que la tension à ses bornes représente l'intensité du courant dans la bobine de déviation (L$_d$), l'une des bornes du condensateur est reliée à un potentiel constant et son autre borne est reliée directement à l'entrée de contre-réaction.

2. Circuit selon la revendication 1, caractérisé en ce qu'une borne du condensateur (C$_c$) de correction est à la masse.

3. Circuit selon la revendication 1 ou 2, caractérisé en ce que le condensateur de correction (C$_c$) est en série avec l'enroulement secondaire d'un transformateur (T$_c$) de correction dont le primaire constitue ladite inductance en série avec la bobine de déviation (L$_d$).

4. Circuit selon la revendication 3, caractérisé en ce que le commutateur (3) est connecté en parallèle avec l'ensemble enroulement secondaire-condensateur de correction (C$_c$).

5. Circuit selon les revendications 2 et 3, caractérisé en ce que la borne du condensateur de correction (C$_c$) qui est à potentiel constant est celle que n'est pas reliée à l'enroulement secondaire.

6. Circuit selon l'une quelconque des revendications précédentes, caractérisé en ce que la capacité du condensateur de correction (C$_c$) est suffisamment élevée pour qu'aucune modulation résiduelle à la fréquence ligne n'apparaisse à ses bornes, et en ce que ledit circuit de correction comporte alors un réseau de contreréaction (P$_B$) à résistance (R$_3$).

7. Circuit selon l'une quelconque des revendications 1 à 4, caractérisé en ce que, comportant un condensateur de correction (C$_c$) de faible capacité provoquant une modulation résiduelle à la fréquence de ligne à ses bornes, il comprend un réseau de contreréaction (P$_B$) à filtre passe-bas.

8. Circuit selon l'une des revendications 1 à 7, et dont le commutateur (3) est un thyristor (TH) et une diode (D) montés tête-bêche, caractérisé en ce que le modulateur de phase (2) comporte un étage d'entrée à transistor (TR$_1$) polarisé en amplificateur, en cascade avec un étage de sortie à transistor de commutation (TR$_2$), l'entrée de cet étage de sortie étant également connectée à un circuit intégrateur (R$_6$, C$_1$) recevant en entrée (E$_2$) des impulsions lignes et dont la sortie est connectée à la gâchette du thyristor (TH).

9. Circuit selon l'une des revendications 1 à 7, et dont le commutateur (3) est un thyristor (TH) et une diode (D) montés tête-bêche, caractérisé en ce que le modulateur de phase (2) est un comparateur (IC$_1$) intégré dont la sortie est connectée à la gâchette du thyristor (TH).


## Patentansprüche

1. Schaltkreis zur Korrektur der kissenförmigen Ost-West-Verzerrung eines auf dem Bildschirm einer Fernsehröhre erhaltenen Bildes, mit einem Korrekturkondensator (C$_c$), einer in Reihe mit der waagerechten Ablenkspule (L$_d$) liegenden Korrekturinduktivität (T$_c$) und einem Schalter (3), der zur Beeinflussung des Werts dieser Induktivität (T$_c$) gesteuert wird, wobei die Steuerung durch einen Schaltkreis mit einem Phasenmodulator (2) erfolgt, dessen Eingang an einen Generator (1) für ein Parabolsignal mit Bildfrequenz sowie an einen Gegenkopplungszweig (P$_B$) angeschlossen ist, durch den ein den Strom in der Ablenkspule darstellendes Signal an einen Eingang des Modulators (2) rückgespeist wird, dadurch gekennzeichnet, daß einer der Anschlüsse des Korrekturkondensators (C$_c$), welcher so angeordnet ist, daß die Spannung an seinen Anschlüssen die Stromstärke in der Ablenkspule (L$_d$) wiedergibt, an ein festes Potential und der andere Anschluß direkt an den Gegenkopplungseingang angeschlossen ist.

2. Schaltkreis nach Anspruch 1, dadurch gekennzeichnet, daß ein Anschluß des Korrekturkondensators (C$_c$) an Masse liegt.

3. Schaltkreis nach Anspruch 1 oder 2, dadurch gekennzeichnet, daß der Korrekturkondensator (C$_c$) in Reihe mit der Sekundärwicklung eines Korrekturtransformators (T$_c$) liegt, dessen Primärwicklung die in Reihe mit der Ablenkspule (L$_d$) liegende Induktivität bildet.

4. Schaltkreis nach Anspruch 3, dadurch gekennzeichnet, daß der Schalter (3) parallel zu der aus der Sekundärwicklung und dem Korrekturkondensator (C$_c$) gebildeten Einheit angeschlossen ist.

5. Schaltkreis nach den Ansprüchen 2 und 3, dadurch gekennzeichnet, daß der an festem Potential liegende Anschluß des Korrekturkondensators (C$_c$) derjenige Anschluß ist, der nicht mit der Sekundärwicklung verbunden ist.

6. Schaltkreis nach einem beliebigen der vorhergehenden Ansprüche, dadurch gekennzeichnet, daß die Kapazität des Korrekturkondensators (C$_c$) hinreichend hoch ist, so daß keine Restmodulation bei der Zeilenfrequenz mehr an seinen Anschlüssen erscheint, und daß der Korrekturschaltkreis demnach ein Gegenkopplungsnetz (P$_B$) mit einem Widerstand (R$_3$) erhält.

7. Schaltkreis nach einem beliebigen der Ansprüche 1 bis 4, dadurch gekennzeichnet, daß bei Verwendung eines Korrekturkondensators (C$_c$) geringer Kapazität, der eine Restmodulation bei der Zeilenfrequenz an seinen Anschlüssen hervorruft, ein Gegenkopplungsnetz (P$_B$) in Form eines Tiefpaßfilters vorgesehen ist.

8. Schaltkreis nach einem der Ansprüche 1 bis 7 und dessen Schalter (3) aus einem Thyristor (TH) und einer Diode (D) in Antiparallelschaltung besteht, dadurch gekennzeichnet, daß der Phasenmodulator (2) eine Eingangsstufe mit einem Transistor (TR$_1$), der als Verstärker vorgespannt ist, und in Kaskade hierzu eine Ausgangsstufe mit einem Schalttransistor (TR$_2$) aufweist, wobei der Eingang dieser Ausgangsstufe außerdem an einen Integrationsschaltkreis (R$_6$, C$_1$) angeschlossen ist, der eingangsseitig (E$_2$) Zeilenimpulse zugeführt erhält und ausgangsseitig an die Zündelektrode des Thyristors (TH) angeschlossen ist.

9. Schaltkreis nach einem der Ansprüche 1 bis 7 und dessen Schalter (3) aus einem Thyristor (TH) und einer Diode (D) in Antiparallelschaltung besteht, dadurch gekennzeichnet, daß der Phasenmodulator ein integrierter Komparator (IC$_1$) ist, dessen Ausgang an die Zündelektrode des Thyristors (TH) angeschlossen ist.

## Claims

1. Circuit for correcting the East-West cushion distortion of an image reproduced on the screen of a television tube, comprising a correction capacitor (C$_c$), a correction inductance (T$_c$) which is serially connected to the horizontal deviation coil (L$_d$), and a switch (3) which is controlled so as to influence the value of said inductance (T$_c$), the control being effected by a circuit comprising a phase modulator (2), the input of which is connected to a generator (1) of parabolic signals at the image frequency and to a feedback branch (P$_B$) injecting a signal representing the diviation coil current back into the input of the modulator (2), characterized in that the correction copacitor (C$_c$) being disposed such that the voltage at its terminals represents the current intensity in the deviation coil (L$_d$), one of the capacitor terminals is connected to a constant potential and the other therminal is directly connected to the feedback input.

2. Circuit according to claim 1, characterized in that one of the terminals of the correction capacitor (C$_c$) is connected to mass potential.

3. Circuit according to claim 1 or 2, characterized in that the correction capacitor (C$_c$) is connected serially to the secondary winding of a correction transformer (T$_c$), the primary winding of which constitutes said inductance in series with the deviation coil (L$_d$).

4. Circuit according to claim 3, characterized in that the switch (3) is parallelly connected to the unit constituted by the secondary winding and the correction capacitor (C$_c$).

5. Circuit according to claims 2 and 3, characterized in that the correction capacitor (C$_c$) terminal which is at a fixed potential is not connected to the secondary winding.

6. Circuit according to any one of the preceding claims, characterized in that the value of the correction capacitor (C$_c$) is so high that no residual modulation at line frequency appears at its terminals, and that said correction circuit comprises a feedback network (P$_B$) made of a resistor (R$_3$).

7. Circuit according to any one of the claims 1 to 4, characterized in that, the correction capacitor (C$_c$) being of a low value and producing at its terminals a residual modulation at line frequency, the circuit comprises a feedback network (P$_B$) made of a low pass filter.

8. Circuit according to one of the claims 1 to 7 and in which the switch (3) is constituted by a thyristor (TH) and a diode (D) in an antiparallel configuration, characterized in that the phase modulator (2) comprises, in a cascade relationship an input stage with a transistor (TR$_1$) which is biased to constitute an amplifier, and an output stage with a switch transistor (TR$_2$), the input of this stage being moreover connected to an integrator circuit (R$_6$, C$_1$) which receives at the input (E$_2$) the line pulses and the output of which is connected to the gate of the thyristor (TH).

9. Circuit according to one of the claims 1 to 7 and in which the switch (3) is constituted by a thyristor (TH) and a diode (D) in an antiparallel configuration, characterized in that the phase modulator (2) is constituted by an integrated comparator (IC$_1$), the output of which is connected to the gate of the thyristor (TH).

0 028 175

# FIG_1

# FIG_2-a

# FIG_3

# FIG_4

# FIG_2·b